# EUROPÄISCHE PATENTSCHRIFT

(11) **EP 4 066 025 B1**
(45) Veröffentlichungstag und Bekanntmachung des Hinweises auf die Patenterteilung: **18.02.2026**
(21) Anmeldenummer: 20800638.7
(22) Anmeldetag: 03.11.2020
(51) Int. Cl.: G02B 5/08, B32B 17/10, G02B 27/00, G02B 27/01, C03C 17/36, B60J 1/02, B60K 35/00, G02B 27/28, B60K 35/231, B60K 35/60

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP-DISPLAY (HUD) USING P-POLARISED LIGHT
AGENCEMENT DE PROJECTION POUR UN AFFICHAGE TÊTE HAUTE (HUD) AVEC RAYONNEMENT POLARISÉ EN P

(30) Priorität: 28.11.2019 EP 19212006
(43) Veröffentlichungstag der Anmeldung: 05.10.2022
(73) Patentinhaber: Saint-Gobain Sekurit France, 60150 Thourotte (FR)
(72) Erfinder: HAGEN, Jan, 53123 Bonn (DE); FISCHER, Klaus, 52477 Alsdorf (DE); HUHN, Norbert, 52134 Herzogenrath (DE)
(74) Vertreter: Feist, Florian Arno
(86) Internationale Anmeldenummer: PCT/EP2020/080723
(87) Internationale Veröffentlichungsnummer: WO 2021/104800

(56) Entgegenhaltungen:
- WO-A1-2019/016548
- WO-A1-2019/179683
- JP-A- 2016 222 523
- US-A1- 2017 242 247
- US-A9- 2018 180 923
- ANONYMOUS: "CHAPTER 5 DEPOSITION AND CHARACTERIZATION OF ZINC STANNATE (Zn 2 SnO 4 ) THIN FILMS", 4 October 2014 (2014-10-04), XP055695782, Retrieved from the Internet <URL:https://shodhganga.inflibnet.ac.in/bitstream/10603/26313/10/10_chapter%205.pdf> [retrieved on 20200515]

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird.

US2017242247A1 offenbart eine weitere HUD-Projektionsanordnung mit einer Reflexionsbeschichtung für p-polarisierte Strahlung. Die Reflexionsbeschichtung kann eine oder mehrere leitfähige Silberschichten enthalten, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist. Dies ist nachteilhaft im Hinblick auf eine farbneutrale Darstellung der HUD-Projektion.

WO2019016548A1 offenbart eine HUD-Projektionsanordnung, wobei die Windschutzscheibe mit einer elektrisch leitfähigen Beschichtung versehen ist, die als Sonnenschutzbeschichtung oder beheizbare Beschichtung dient. Die Beschichtung umfasst mindestens eine Silberschicht, darunter eine Schicht aus Zinn-Zink-Oxid mit einer Dicke von 25 nm bis 32 nm und darüber eine Schicht aus Zinn-Zink-Oxid mit einer Dicke von 75 nm bis 85 nm. Die Beschichtung ist nicht als Reflexionsbeschichtung vorgesehen, vielmehr soll eine störende Reflexion an der Beschichtung durch lichtintensitätsreduzierende Mittel (insbesondere eine weitere, lichtabsorbierende Beschichtung) verringert werden, um Geisterbilder zu vermeiden.

Es besteht Bedarf an Projektionsanordnungen für HUDs mit Reflexionsbeschichtungen, die eine hohe Transmission im sichtbaren Spektralbereich gewährleisten sowie eine hohe Reflektivität gegenüber p-polarisierter Strahlung aufweisen und eine farbneutrale Darstellung erlauben. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne Silberschicht setzt die Lichttransmission nicht übermäßig herab, so dass die Scheibe weiterhin als Windschutzscheibe verwendet werden kann. Das erfindungsgemäße Verhältnis der optischen Dicken der oberen und unteren dielektrischen Schichtenfolge bewirkt eine Glättung des Reflexionsspektrums, so dass eine farbneutrale Darstellung gewährleistet ist. Die vorteilhaften Reflexionseigenschaften, insbesondere die Gleichmäßigkeit des Spektrums, erstrecken sich sogar über den HUD-relevanten Spektralbereich hinaus auf einen Spektralbereich von 400 nm bis 680 nm, so dass neben einer guten HUD-Darstellung ein positiver Gesamteindruck der Scheibe erreicht wird ohne störenden Farbstich. Das sind große Vorteile der vorliegenden Erfindung.

Die erfindungsgemäße Projektionsanordnung für ein Head-Up-Display (HUD) umfasst mindestens eine Windschutzscheibe, die mit einer Reflexionsbeschichtung versehen ist, und einen Projektor (HUD-Projektor). Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Windschutzscheibe gerichtet. Er bestrahlt den HUD-Bereich mit Strahlung im sichtbaren Bereich des elektromagnetischen Spektrums zur Erzeugung der HUD-Projektion, insbesondere im Spektralbereich von 450 nm bis 650 nm, beispielsweise mit den Wellenlängen 473 nm, 550 nm und 630 nm (RGB). Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Die auf die Windschutzscheibe gerichtete Projektorstrahlung wird hauptsächlich an der Reflexionsbeschichtung reflektiert, die intensitätsstärkste Reflexion findet also an der Reflexionsbeschichtung statt. Das heißt die Intensität der an der Reflexionsbeschichtung reflektierten Projektorstrahlung ist höher als die Intensität der an jeder anderen Grenzfläche reflektierten Strahlung, insbesondere höher als die Intensitäten der an der innenraumseitigen Oberfläche der Innenscheibe und der außenseitigen Oberfläche der Außenscheibe reflektierten Projektorstrahlung.

Die Windschutzscheibe weist bevorzugt keine weiteren Dünnschichtbeschichtungen außer der Reflexionsbeschichtung auf, insbesondere keine solchen Beschichtungen, welche die Intensität der an der Reflexionsbeschichtung reflektierten Projektorstrahlung verringern.

Die erfindungsgemäße Reflexionsbeschichtung weist genau eine elektrisch leitfähige Schicht auf Basis von Silber auf. Unterhalb der elektrisch leitfähigen Schicht ist eine untere dielektrische Schicht oder Schichtenfolge angeordnet. Ebenso ist oberhalb der elektrisch leitfähigen Schicht eine obere dielektrische Schicht oder Schichtenfolge angeordnet. Die obere und die untere dielektrische Schicht oder Schichtenfolge weisen jeweils einen Brechungsindex auf, der mindestens 1,9 beträgt.

Brechungsindizes sind im Rahmen der vorliegenden Erfindung grundsätzlich bezogen auf eine Wellenlänge von 550 nm angegeben. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Erfindungsgemäß beträgt das Verhältnis der optischen Dicke der oberen dielektrischen Schicht oder Schichtenfolge zur optischen Dicke der unteren dielektrischen Schicht oder Schichtenfolge mindestens 1,7. Es hat sich überraschend gezeigt, dass diese Asymmetrie der optischen Dicken zu einem deutlich glatteren Reflexionsspektrum gegenüber p-polarisierter Strahlung führt, so dass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe.

Das erfindungsgemäße Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor).

In einer bevorzugten Ausgestaltung beträgt das Verhältnis der optischen Dicke der oberen dielektrischen Schicht oder Schichtenfolge zur optischen Dicke der unteren dielektrischen Schicht oder Schichtenfolge mindestens 1,8, besonders bevorzugt mindestens 1,9. Damit werden besonders gute Ergebnisse erzielt.

Die Reflexionsbeschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Besonders bevorzugt ist die Anordnung der Reflexionsbeschichtung auf der außenseitigen Oberfläche der Innenscheibe, weil die Projektorstrahlung dann den geringstmöglichen Weg durch die Windschutzscheibe zurücklegen muss, bis sie auf die Reflexionsbeschichtung trifft. Das ist vorteilhaft im Hinblick auf die Qualität des HUD-Bildes. Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist.

Die erfindungsgemäße Reflexionsbeschichtung weist aufgrund der elektrisch leitfähigen Silberschicht IR-reflektierende Eigenschaften auf, so dass sie als Sonnenschutzbeschichtung fungiert, welche die Aufheizung des Fahrzeuginnenraums durch Reflexion der Wärmestrahlung verringert. Die Reflexionsbeschichtung kann auch als Heizbeschichtung verwendet werden, wenn sie elektrisch kontaktiert wird, so dass ein Strom durch sie fließt, welcher die Reflexionsbeschichtung erwärmt.

Die mit der Reflexionsbeschichtung versehene Windschutzscheibe weist bevorzugt im Spektralbereich von 400 nm bis 680 nm einen gemittelten Reflexionsgrad gegenüber p-polarisierter Strahlung von mindestens 15% auf, besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 400 nm bis 680 nm mindestens 15 %, bevorzugt mindestens 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 400 nm bis 680 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der erfindungsgemäßen Reflexionsbeschichtung aufgrund ihrer elektrisch leitfähigen Schicht problemlos erreicht werden.

Als Maß für die Glätte des Reflexionsspektrums kann alternativ die Standardabweichung im Spektralbereich von 400 nm bis 680 nm herangezogen werden. Sie beträgt bevorzugt kleiner 1%, besonders bevorzugt kleiner 0,9 %, ganz besonders bevorzugt kleiner 0,8 %.

Die oben genannten gewünschten Reflexionscharakteristika werden insbesondere durch die Wahl der Materialien und Dicken der Einzelschichten sowie den Aufbau der dielektrischen Schichtenfolgen erreicht. Die Reflexionsbeschichtung kann so geeignet eingestellt werden.

Die Reflexionsbeschichtung ist ein Dünnschichtstapel, also eine Schichtenfolge dünner Einzelschichten. Dieser Dünnschichtstapel enthält genau eine elektrisch leitfähige Schicht auf Basis von Silber. Die elektrisch leitfähige Schicht auf Basis von Silber verleiht der Reflexionsbeschichtung die grundlegenden reflektierenden Eigenschaften und außerdem eine IR-reflektierende Wirkung und eine elektrische Leitfähigkeit. Die elektrisch leitfähige Schicht auf Basis von Silber kann auch vereinfacht als Silberschicht bezeichnet werden. Die Reflexionsbeschichtung enthält genau eine Silberschicht, also nicht mehr als eine Silberschicht, und auch oberhalb oder unterhalb der Reflexionsbeschichtung sind keine weiteren Silberschichten angeordnet. Es ist ein besonderer Vorteil der vorliegenden Erfindung, dass mit einer Silberschicht die gewünschten Reflexionseigenschaften erreicht werden können, ohne dass die Transmission zu stark herabgesetzt würde, wie es bei der Verwendung mehrerer leitfähiger Schichten der Fall wäre. Es können aber weitere elektrisch leitfähige Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die elektrisch leitfähige Schicht ist auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Paladium, Gold, Kupfer oder Aluminium. Die geometrische Schichtdicke der Silberschicht beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm.

Gemäß der beanspruchten Erfindung umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Es ist ein besonderer Vorteil der vorliegenden Erfindung, dass die gewünschten Reflexionseigenschaften allein mit relativ hochbrechenden dielektrischen Schichten erreicht werden können. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Die Reflexionsbeschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Durch die Dotierungen können an sich dielektrische Materialien mit einer gewissen elektrischen Leitfähigkeit versehen werden. Der Fachmann wird sie hinsichtlich Ihrer Funktion dennoch als dielektrische Schichten identifizieren, wie es im Bereich der dünnen Schichten üblich ist. Das Material der dielektrischen Schichten weist bevorzugt eine elektrische Leitfähigkeit (Kehrwert des spezifischen Widerstands) von kleiner 10⁻⁴ S/m auf. Das Material der elektrisch leitfähigen Schichten weist bevorzugt eine elektrische Leitfähigkeit von größer 10⁴ S/m auf.

Die optische Dicke der oberen dielektrischen Schicht oder Schichtenfolge beträgt bevorzugt von 100 nm bis 200 nm, besonders bevorzugt von 130 nm bis 170 nm. Die optische Dicke der unteren dielektrischen Schicht oder Schichtenfolge beträgt bevorzugt von 50 nm bis 100 nm, besonders bevorzugt von 60 nm bis 90 nm. Damit werden gute Ergebnisse erzielt.

In einer vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, Zr₃N₄ und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung der Erfindung ist unterhalb der elektrisch leitfähigen Schicht genau eine untere dielektrische Schicht mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren Ausgestaltung der Erfindung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung der Erfindung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:
- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht
- untere Entspiegelungsschicht - untere brechungsindexsteigernde Schicht - untere Anpassungsschicht - Silberschicht - obere Anpassungsschicht - obere Entspiegelungsschicht
- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung umfasst die Reflexionsbeschichtung mindestens eine metallische Blockerschicht. Die Blockerschicht kann unterhalb und/oder oberhalb der Silberschicht angeordnet sein und steht bevorzugt mit der Silberschicht in direktem Kontakt. Die Blockerschicht liegt dann zwischen Silberschicht und dielektrischer Schicht/Schichtenfolge. Die Blockerschicht dient dem Oxidationsschutz der Silberschicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von weniger als 1 nm auf, beispielsweise 0,1 nm bis 0,5 nm. Die Blockerschicht ist bevorzugt auf Basis von Titan oder einer Nickel-Chrom-Legierung ausgebildet. Besonders effektiv ist die Blockerschicht direkt oberhalb der Silberschicht, weswegen in einer bevorzugten Ausgestaltung die Reflexionsbeschichtung eine Blockerschicht oberhalb der Silberschicht und keine Blockerschicht unterhalb der Silberschicht aufweist. Die Silberschicht steht dann mit der unteren dielektrischen Schicht(enfolge) in direktem Kontakt und mit der oberen dielektrischen Schicht(enfolge) in indirektem Kontakt über die Blockerschicht.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberer dielektrischer Schicht(enfolge), wo sie besonders effektiv ist. Es ergeben sich folgende bevorzugte Schichtenfolgen:
- untere Entspiegelungsschicht - Silberschicht - Blockerschicht - obere Entspiegelungsschicht
- untere Entspiegelungsschicht - Silberschicht - Blockerschicht - obere Anpassungsschicht - obere Entspiegelungsschicht
- untere Entspiegelungsschicht - Silberschicht - Blockerschicht - obere Anpassungsschicht - obere brechungsindexsteigernde Schicht - obere Entspiegelungsschicht
- untere Entspiegelungsschicht - untere Anpassungsschicht - Silberschicht - Blockerschicht - obere Entspiegelungsschicht
- untere Entspiegelungsschicht - untere Anpassungsschicht - Silberschicht - Blockerschicht - obere Anpassungsschicht - obere Entspiegelungsschicht
- untere Entspiegelungsschicht - untere Anpassungsschicht - Silberschicht - Blockerschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - Blockerschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht

Es kann jeweils optional eine zusätzliche Blockerschicht direkt unterhalb der Silberschicht angeordnet sein, also zwischen Silberschicht und unterer dielektrischer Schicht(enfolge).

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Polarisation, also insbesondere der Anteil an p- und s-polarisierter Strahlung, wird an einem Punkt des HUD-Bereichs bestimmt, bevorzugt im geometrischen Zentrum des HUD-Bereichs. Da Windschutzscheiben üblicherweise gekrümmt sind, was Auswirkungen auf die Einfallsebene der Projektorstrahlung hat, können in den übrigen Bereichen leicht davon abweichende Polarisationsanteile auftreten, was aus physikalischen Gründen unvermeidlich ist.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 56,5°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind aus Kalk-Natron-Glas gefertigt, was für Fensterscheiben üblich ist. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Windschutzscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Windschutzscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Windschutzscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst außerdem die Verwendung einer erfindungsgemäß ausgebildeten Windschutzscheibe als Projektionsfläche einer Projektionsanordnung für ein Head-Up-Display, wobei ein Projektor auf den HUD-Bereich gerichtet ist, dessen Strahlung überwiegend p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Kraftfahrzeug, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung der erfindungsgemäßen Reflexionsbeschichtung auf einer Innenscheibe,
- Fig. 5: Reflexionsspektren von Verbundscheiben gegenüber p-polarisierter Strahlung gemäß den Beispielen 1 und 2 und dem Vergleichsbeispiel 1,
- Fig. 6: Reflexionsspektren von Verbundscheiben gegenüber p-polarisierter Strahlung gemäß dem Beispiel 3 und dem Vergleichsbeispiel 2 und
- Fig. 7: Reflexionsspektren von Verbundscheiben gegenüber p-polarisierter Strahlung gemäß den Beispielen 4 und 5 und den Vergleichsbeispielen 3 und 4.

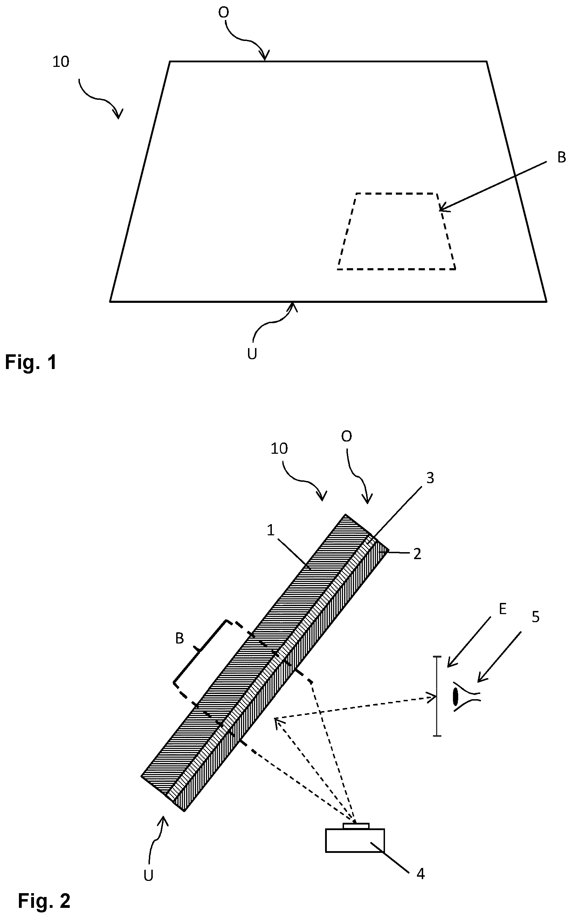

Fig. 1 und Fig. 2 zeigen je ein Detail einer gattungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

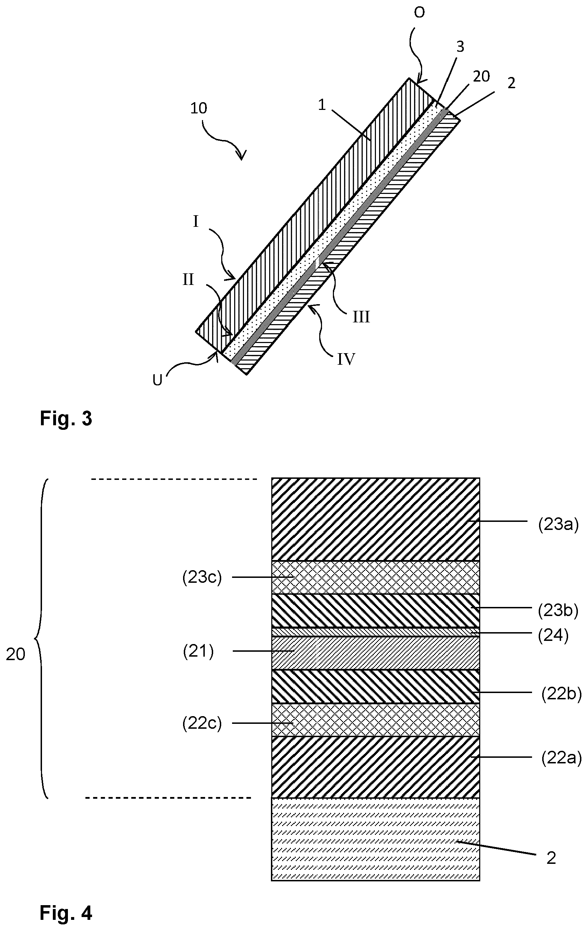

Fig. 3 zeigt eine Ausgestaltung einer erfindungsgemäß ausgebildeten Windschutzscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder 2,1 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I**,** IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Fig. 4 zeigt die Schichtenfolge einer Ausgestaltung der erfindungsgemäßen Reflexionsbeschichtung 20. Die Reflexionsbeschichtung 20 ist ein Stapel von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a. Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a.

Der dargestellte Schichtaufbau ist lediglich beispielhaft zu versehen. So können die dielektrischen Schichtenfolgen auch mehr oder weniger Schichten umfassen, solange mindestens eine dielektrische Schicht oberhalb und unterhalb der leitfähigen Schicht 21 vorhanden ist. Die dielektrischen Schichtenfolgen müssen auch nicht symmetrisch sein. Beispielhafte Materialien und Schichtdicken können den nachfolgenden Beispielen entnommen werden.

Die Schichtenfolgen einer Windschutzscheibe 10 mit der Reflexionsbeschichtung 20 auf der außenseitigen Oberfläche III der Innenscheibe 2 gemäß der erfindungsgemäßen Beispiele 1 bis 5 sind, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium.

**Tabelle 1**

| Material | Bezugszeichen | | Schichtdicke | | | | |
|---|---|---|---|---|---|---|---|
| | | | Beispiel 1 | Beispiel 2 | Beispiel 3 | Beispiel 4 | Beispiel 5 |
| Kalk-Natron-Glas | 1 | | 2,1 mm | 2,1 mm | 2,1 mm | 2,1 mm | 2,1 mm |
| PVB | 3 | | 0,76 mm | 0,76 mm | 0,76 mm | 0,76 mm | 0,76 mm |
| SiN | 20 | 23a | 70 nm | 70 nm | 60 nm | 60 nm | 60 nm |
| SiZrN | | 23c | - | - | - | 10 nm | 10 nm |
| ZnO | | 23b | - | - | 10 nm | 10 nm | 10 nm |
| NiCr | | 24 | 0,3 nm | 0,3 nm | 0,3 nm | 0,3 nm | 0,3 nm |
| **Ag** | | **21** | **11 nm** | **12 nm** | **12 nm** | **11 nm** | **13 nm** |
| ZnO | | 22b | - | - | 10 nm | 10 nm | 10 nm |
| SiZrN | | 22c | - | - | - | 10 nm | 10 nm |
| SiN | | 22a | 30 nm | 35 nm | 25 nm | 20 nm | 20 nm |
| Kalk-Natron-Glas | 2 | | 2,1 mm | 2,1 mm | 2,1 mm | 2,1 mm | 2,1 mm |

Zum Vergleich wurden Vergleichsbeispiele 1 bis 4 untersucht, die nicht die erfindungsgemäßen Merkmale erfüllen. Ihre Schichtenfolgen sind in Tabelle 2 dargestellt.

**Tabelle 2**

| Material | Bezugszeichen | | Schichtdicke | | | |
|---|---|---|---|---|---|---|
| | | | Vergleichsbeispiel 1 | Vergleichsbeispiel 2 | Vergleichsbeispiel 3 | Vergleichsbeispiel 4 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| SiN | 20 | 23a | 50 nm | 35 nm | 30 nm | 40 nm |
| SiZrN | | 23c | - | - | 10 nm | 10 nm |
| ZnO | | 23b | - | 10 nm | 10 nm | 10 nm |
| NiCr | | 24 | 0,3 nm | 0,3 nm | 0,3 nm | 0,3 nm |
| **Ag** | | **21** | **12 nm** | **13 nm** | **13 nm** | **13 nm** |
| ZnO | | 22b | - | 10 nm | 10 nm | 10 nm |
| SiZrN | | 22c | - | - | 10 nm | 10 nm |
| SiN | | 22a | 50 nm | 35 nm | 50 nm | 40 nm |
| Kalk-Natron-Glas | 2 | | 2,1 mm | 2,1 mm | 2,1 mm | 2,1 mm |

Die Beispiele und die Vergleichsbeispiele unterscheiden sich in erster Linie durch das Verhältnis der optischen Dicke der oberen dielektrischen Schichtenfolge zur optischen Dicke der unteren dielektrischen Schichtenfolge. Die optische Dicke ergibt sich jeweils als Produkt aus der in den Tabellen 1 und 2 dargestellten geometrischen Dicke und dem Brechungsindex (SiN: 2,0; SiZrN: 2,2, ZnO: 2,0). Die optischen Dicken und ihr Verhältnis sind in Tabelle 3 zusammengefasst. Das Verhältnis ϕ beschreibt das Verhältnis der optischen Dicke der oberen dielektrischen Schicht 23a bzw. Schichtenfolge 23a, 23b, ggf. 23c zur optischen Dicke der unteren dielektrischen Schicht 22a oder Schichtenfolge 22a, 22b, ggf. 22c.

**Tabelle 3**

| | optische Dicke der oberen dielektrischen Schichtenfolge | optische Dicke der unteren dielektrischen Schichtenfolge | Verhältnis ϕ |
|---|---|---|---|
| Beispiel 1 | 140 | 60 | 2,33 |
| Beispiel 2 | 140 | 70 | 2,00 |
| Beispiel 3 | 140 | 70 | 2,00 |
| Beispiel 4 | 162 | 82 | 1,98 |
| Beispiel 5 | 162 | 82 | 1,98 |
| Vergleichsbeispiel 1 | 100 | 100 | 1,00 |
| Vergleichsbeispiel 2 | 90 | 90 | 1,00 |
| Vergleichsbeispiel 3 | 102 | 142 | 0,72 |
| Vergleichsbeispiel 4 | 122 | 122 | 1,00 |

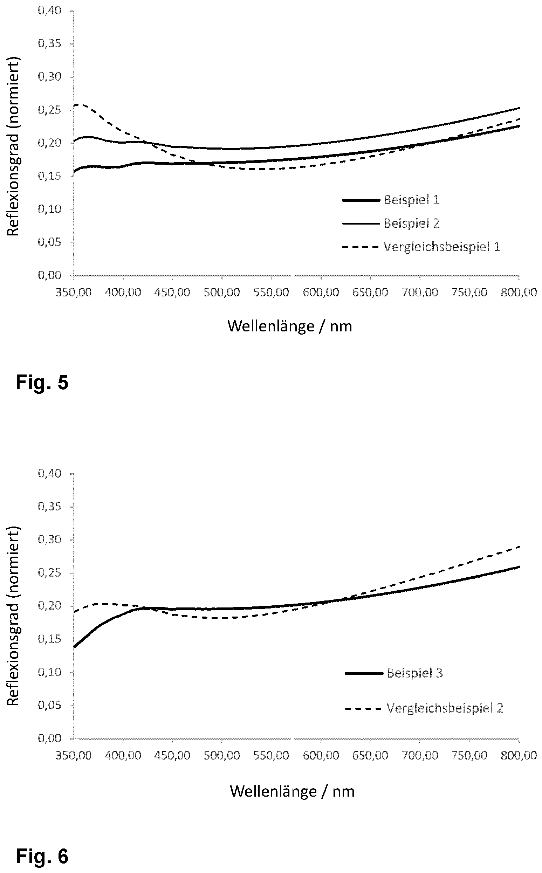

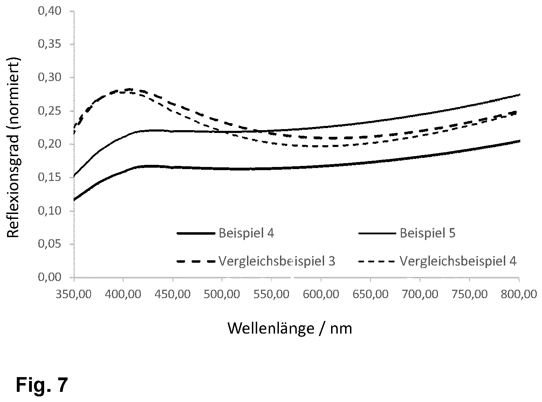

Fig. 5, Fig. 6 und Fig. 7 zeigen Reflexionsspektren von Verbundscheibe 10 wie in Figur 3, jeweils mit einem Schichtaufbau gemäß der erfindungsgemäßen Beispiele 1 bis 5 nach Tabelle 1 sowie gemäß der Vergleichsbeispiele 1 bis 4 nach Tabelle 2. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert. Der besseren Übersichtlichkeit halber sind jeweils die Beispiele und Vergleichsbeispiele zusammengefasst, die einen ähnlichen Schichtaufbau aufwiesen. In Figur 5 sind die Beispiele 1 und 2 und das Vergleichsbeispiel 1 dargestellt, die jeweils nur über dielektrische Entspiegelungsschichten 22a, 23a verfügen. In Figur 6 sind das Beispiel 3 und das Vergleichsbeispiel 2 dargestellt, die jeweils über dielektrische Entspiegelungsschichten 22a, 23a und Anpassungsschichten 22b, 23b verfügen. In Figur 7 sind die Beispiele 4 und 5 und die Vergleichsbeispiele 3 und 4 dargestellt, die jeweils über dielektrische Entspiegelungsschichten 22a, 23a, Anpassungsschichten 22b, 23b und brechungsindexsteigernde Schichten 22c, 23c verfügen.

Bereits aus der graphischen Darstellung der Spektren ist ersichtlich, dass die erfindungsgemäßen Beispiele mit dem erfindungsgemäßen Verhältnis der optischen Dicken von oberer und unterer dielektrischer Schicht beziehungsweise Schichtenfolge zu einem wesentlich glatteren Spektrum im interessierenden Spektralbereich von 400 nm bis 680 nm führen. Dadurch wird eine farbneutralere Darstellung der HUD-Projektion sichergestellt. Außerdem wird der generelle Farbeindruck der Scheibe verbessert.

Der gemittelte Reflexionsgrad gegenüber p-polarisierter Strahlung sowie die Differenzen der Maximal- und Minimalwerte zum gemittelten Reflexionsgrad der Beispiele 1 bis 5 sind in Tabelle 4 zusammengefasst, die entsprechenden Werte für die Vergleichsbeispiel 1 bis 4 in Tabelle 5. Außerdem ist jeweils die Standardabweichung des Reflexionsspektrums angegeben. Die Analysen beziehen sich jeweils auf den Spektralbereich von 400 nm bis 680 nm.

**Tabelle 4**

| | Beispiel 1 | Beispiel 2 | Beispiel 3 | Beispiel 4 | Beispiel 5 |
|---|---|---|---|---|---|
| gemittelten Reflexionsgrad gegenüber p-polarisierter Strahlung, 400 nm-680 nm | 17,6% | 19,9% | 20,2% | 16,6% | 22,3% |
| Differenz zwischen dem maximal auftretenden Reflexionsgrad und dem Mittelwert | 1,8% | 1,7% | 2,0% | 1,1% | 1,6% |
| Differenz zwischen dem minimal auftretenden Reflexionsgrad und dem Mittelwert | 1,1% | 0,7% | 1,5% | 0,9% | 1,3% |
| Standardabweichung, 400 nm-680 nm | 0,55% | 0,48% | 0,60% | 0,27% | 0,62% |

**Tabelle 5**

| | Vergleichsbeispiel 1 | Vergleichsbeispiel 2 | Vergleichsbeispiel 3 | Vergleichsbeispiel 4 |
|---|---|---|---|---|
| gemittelten Reflexionsgrad gegenüber p-polarisierter Strahlung, 400 nm-680 nm | 17,6% | 19,8% | 23,1% | 22,0% |
| Differenz zwischen dem maximal auftretenden Reflexionsgrad und dem Mittelwert | 4,2% | 3,6% | 5,1% | 5,8% |
| Differenz zwischen dem minimal auftretenden Reflexionsgrad und dem Mittelwert | 1,4% | 1,6% | 2,2% | 2,3% |
| Standardabweichung, 400 nm-680 nm | 1,49% | 1,11% | 2,52% | 2,70% |

Bei den Vergleichsbeispielen sind zwar auch relativ hohe gemittelte Reflexionswerte erreichbar, jedoch sind die Spektren im relevanten Spektralbereich von 400 nm bis 680 nm starken Schwankungen unterworfen, was zu unerwünschten Farbverschiebungen des HUD-Bildes führen kann sowie zu einem schlechteren Farbeindruck der Scheibe für den Betrachter. Im Gegensatz dazu bewirkt das Verhältnis der optischen Dicken von unterer und oberer dielektrischer Schicht/Schichtenfolge der erfindungsgemäßen Beispiele eine deutliche Glättung des Reflexionsspektrums, was zu einer farbneutraleren Widergabe des Projektorbildes und einem farbneutraleren Gesamteindruck führt.

Alle Scheiben wiesen eine Lichttransmission von größer als 70% auf, so dass sie als Windschutzscheibe eingesetzt werden können.

Es wurden auch Versuche durchgeführt mit einer Windschutzscheibe mit grün gefärbtem Außenglas. Die Reflexionsbeschichtung entsprach im Wesentlichen dem Beispiel 1, wobei lediglich die obere Entspiegelungsschicht 23a etwas dünner ausgebildet war (60 nm statt 70 nm). Die außenseitige Reflexion konnte deutlich reduziert werden (um 3-4% bei Beobachtungswinkeln von 8° und 60°, integrale Reflexion).

### Bezugszeichenliste:

- (10): Windschutzscheibe

- (1): Außenscheibe
- (2): Innenscheibe
- (3): thermoplastische Zwischenschicht
- (4): Projektor
- (5): Betrachter / Fahrzeugfahrer

- (20): Reflexionsbeschichtung
- (21): elektrisch leitfähige Schicht
- (22a): erste untere dielektrische Schicht / Entspiegelungsschicht
- (22b): zweite untere dielektrische Schicht / Anpassungsschicht
- (22c): dritte untere dielektrische Schicht / brechungsindexsteigernde Schicht
- (23a): erste obere dielektrische Schicht / Entspiegelungsschicht
- (23b): zweite obere dielektrische Schicht / Anpassungsschicht
- (23c): dritte obere dielektrische Schicht / brechungsindexsteigernde Schicht
- (24): metallische Blockerschicht

- (O): Oberkante der Windschutzscheibe 10
- (U): Unterkante der Windschutzscheibe 10
- (B): HUD-Bereich der Windschutzscheibe 10
- (E): Eyebox

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Windschutzscheibe (10), umfassend eine Außenscheibe (1) aus Kalk-Natron-Glas und eine Innenscheibe (2) aus Kalk-Natron-Glas, die über eine thermoplastische Zwischenschicht (3) miteinander verbunden sind, mit einem HUD-Bereich (B); und
- einen Projektor (4), der auf den HUD-Bereich (B) gerichtet ist, wobei die Strahlung des Projektors (4) mit einem Einfallswinkel von 45° bis 70° auf die Windschutzscheibe (10) trifft;
wobei
- die Strahlung des Projektors (4) überwiegend p-polarisiert ist und
- die Windschutzscheibe (10) mit einer Reflexionsbeschichtung (20) versehen ist, die geeignet ist, p-polarisierte Strahlung zu reflektieren;
und wobei
- die Reflexionsbeschichtung (20) genau eine elektrisch leitfähige Schicht (21) auf Basis von Silber aufweist,
- unterhalb der elektrisch leitfähigen Schicht (21) eine untere dielektrische Schicht (22a) oder Schichtenfolge (22a, 22b, 22c) angeordnet ist, deren Brechungsindex mindestens 1,9 beträgt,
- oberhalb der elektrisch leitfähigen Schicht (21) eine obere dielektrische Schicht (23a) oder Schichtenfolge (23a, 23b, 23c) angeordnet ist, deren Brechungsindex mindestens 1,9 beträgt,
- alle dielektrischen Schichten (22a, 22b, 22c; 23a, 23b, 23c) der Reflexionsbeschichtung (20) einen Brechungsindex von mindestens 1,9 aufweisen, **dadurch gekennzeichnet, dass**:
- das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,7 beträgt.

2. Projektionsanordnung nach Anspruch 1, wobei das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,8 beträgt, bevorzugt mindestens 1,9.

3. Projektionsanordnung nach Anspruch 1 oder 2, wobei die optische Dicke der oberen dielektrischen Schicht (23a) oder Schichtenfolge (23a, 23b, 23c) von 100 nm bis 200 nm beträgt, bevorzugt von 130 nm bis 170 nm.

4. Projektionsanordnung nach einem der Ansprüche 1 bis 3, wobei die optische Dicke der unteren dielektrischen Schicht (22a) oder Schichtenfolge (23a, 23b, 23c) von 50 nm bis 100 nm beträgt, bevorzugt von 60 nm bis 90 nm.

5. Projektionsanordnung nach einem der Ansprüche 1 bis 4, wobei
- unterhalb der elektrisch leitfähigen Schicht (21) genau eine untere dielektrische Schicht (22a) angeordnet ist, bevorzugt auf Basis von Siliziumnitrid, und/oder
- oberhalb der elektrisch leitfähigen Schicht (21) genau eine obere dielektrische Schicht (22a) angeordnet ist, bevorzugt auf Basis von Siliziumnitrid.

6. Projektionsanordnung nach einem der Ansprüche 1 bis 5, wobei
- unterhalb der elektrisch leitfähigen Schicht (21) eine erste untere dielektrische Schicht (22a), bevorzugt auf Basis von Siliziumnitrid, und eine zweite untere dielektrische Schicht (22b), bevorzugt auf Basis von Zinkoxid, sind und/oder
- oberhalb der elektrisch leitfähigen Schicht (21) eine erste obere dielektrische Schicht (23a), bevorzugt auf Basis von Siliziumnitrid, und eine zweite obere dielektrische Schicht (23b), bevorzugt auf Basis von Zinkoxid, angeordnet sind.

7. Projektionsanordnung nach einem der Ansprüche 1 bis 6, wobei
- unterhalb der elektrisch leitfähigen Schicht (21) eine erste untere dielektrische Schicht (22a), bevorzugt auf Basis von Siliziumnitrid, eine zweite untere dielektrische Schicht (22b), bevorzugt auf Basis von Zinkoxid, und eine dritte untere dielektrische Schicht (22c), bevorzugt auf Basis eines Silizium-Metall-Mischnitrids, insbesondere Silizium-Zirkonium-Mischnitrid oder Silizium-Hafnium-Mischnitrid, angeordnet sind und/oder
- oberhalb der elektrisch leitfähigen Schicht (21) eine erste obere dielektrische Schicht (23a), bevorzugt auf Basis von Siliziumnitrid, eine zweite obere dielektrische Schicht (23b), bevorzugt auf Basis von Zinkoxid, und eine dritte obere dielektrische Schicht (23c), bevorzugt auf Basis eines Silizium-Metall-Mischnitrids, insbesondere Silizium-Zirkonium-Mischnitrid oder Silizium-Hafnium-Mischnitrid, angeordnet sind.

8. Projektionsanordnung nach einem der Ansprüche 1 bis 7, wobei die Reflexionsbeschichtung (20) mindestens eine metallische Blockerschicht (24) umfasst, die oberhalb und/oder unterhalb der elektrisch leitfähigen Schicht (21) angeordnet ist und eine geometrische Dicke von weniger als 1 nm aufweist.

9. Projektionsanordnung nach einem der Ansprüche 1 bis 8, wobei die Außenscheibe (1) getönt oder gefärbt ist und eine Lichttransmission von mindestens 80% aufweist.

10. Projektionsanordnung nach einem der Ansprüche 1 bis 9, wobei die Strahlung des Projektors (4) im Wesentlichen rein p-polarisiert ist.

11. Projektionsanordnung nach einem der Ansprüche 1 bis 10, wobei die Strahlung des Projektors (4) mit einem Einfallswinkel von 60° bis 70° auf die Windschutzscheibe (10) trifft.

12. Projektionsanordnung nach einem der Ansprüche 1 bis 11, wobei die elektrisch leitfähige Schicht (21) eine geometrische Dicke von 10 nm bis 14 nm aufweist.

13. Projektionsanordnung nach einem der Ansprüche 1 bis 12, wobei die externen Oberflächen (I, IV) der Windschutzscheibe (10) im Wesentlichen parallel zueinander angeordnet sind.

14. Projektionsanordnung nach einem der Ansprüche 1 bis 13, wobei die Reflexionsbeschichtung (20) auf der zur Zwischenschicht (3) hingewandten Oberfläche (II, III) der Außenscheibe (1) oder der Innenscheibe (2) oder innerhalb der Zwischenschicht (3) angeordnet ist.

## Claims

1. Projection assembly for a head-up display (HUD), at least comprising
- a windscreen (10) comprising an outer pane (1) made of soda lime glass and an inner pane (2) made of soda lime glass, which are connected to one another via a thermoplastic intermediate layer (3), and having a HUD region (B); and
- a projector (4) directed at the HUD region (B), the radiation from the projector (4) striking the windscreen (10) at an angle of incidence of 45° to 70°;
wherein
- the radiation of the projector (4) is predominantly p-polarised and
- the windscreen (10) is provided with a reflective coating (20) which is suitable for reflecting p-polarised radiation;
and wherein
- the reflective coating (20) has exactly one electrically conductive layer (21) based on silver,
- a lower dielectric layer (22a) or layer sequence (22a, 22b, 22c), the refractive index of which is at least 1.9, is arranged below the electrically conductive layer (21),
- an upper dielectric layer (23a) or layer sequence (23a, 23b, 23c), the refractive index of which is at least 1.9, is arranged above the electrically conductive layer (21),
- all dielectric layers (22a, 22b, 22c; 23a, 23b, 23c) of the reflective coating (20) have a refractive index of at least 1.9,
**characterised in that:**
- the ratio of the optical thickness of the upper dielectric layer (23a) or layer sequence (23a, 23b, 23c) to the optical thickness of the lower dielectric layer (22a) or layer sequence (22a, 22b, 22c) is at least 1.7.

2. Projection assembly according to claim 1, wherein the ratio of the optical thickness of the upper dielectric layer (23a) or layer sequence (23a, 23b, 23c) to the optical thickness of the lower dielectric layer (22a) or layer sequence (22a, 22b, 22c) is at least 1.8, preferably at least 1.9.

3. Projection assembly according to claim 1 or claim 2, wherein the optical thickness of the upper dielectric layer (23a) or layer sequence (23a, 23b, 23c) is from 100 nm to 200 nm, preferably from 130 nm to 170 nm.

4. Projection assembly according to any of claims 1 to 3, wherein the optical thickness of the lower dielectric layer (22a) or layer sequence (23a, 23b, 23c) is from 50 nm to 100 nm, preferably from 60 nm to 90 nm.

5. Projection assembly according to any of claims 1 to 4, wherein
- exactly one lower dielectric layer (22a), preferably based on silicon nitride, is arranged below the electrically conductive layer (21), and/or
- exactly one upper dielectric layer (22a), preferably based on silicon nitride, is arranged above the electrically conductive layer (21).

6. Projection assembly according to any of claims 1 to 5, wherein
- a first lower dielectric layer (22a), preferably based on silicon nitride, and a second lower dielectric layer (22b), preferably based on zinc oxide, are arranged below the electrically conductive layer (21), and/or
- a first upper dielectric layer (23a), preferably based on silicon nitride, and a second upper dielectric layer (23b), preferably based on zinc oxide, are arranged above the electrically conductive layer (21).

7. Projection assembly according to any of claims 1 to 6, wherein
- a first lower dielectric layer (22a), preferably based on silicon nitride, a second lower dielectric layer (22b), preferably based on zinc oxide, and a third lower dielectric layer (22c), preferably based on a silicon-metal mixed nitride, in particular silicon-zirconium mixed nitride or silicon-hafnium mixed nitride, are arranged below the electrically conductive layer (21), and/or
- a first upper dielectric layer (23a), preferably based on silicon nitride, a second upper dielectric layer (23b), preferably based on zinc oxide, and a third upper dielectric layer (23c), preferably based on a silicon-metal mixed nitride, in particular silicon-zirconium mixed nitride or silicon-hafnium mixed nitride, are arranged above the electrically conductive layer (21).

8. Projection assembly according to any of claims 1 to 7, wherein the reflective coating (20) comprises at least one metal blocker layer (24) which is arranged above and/or below the electrically conductive layer (21) and has a geometric thickness of less than 1 nm.

9. Projection assembly according to any of claims 1 to 8, wherein the outer pane (1) is tinted or coloured and has a light transmittance of at least 80%.

10. Projection assembly according to any of claims 1 to 9, wherein the radiation of the projector (4) is substantially purely p-polarised.

11. Projection assembly according to any of claims 1 to 10, wherein the radiation of the projector (4) strikes the windscreen (10) at an angle of incidence of 60° to 70°.

12. Projection assembly according to any of claims 1 to 11, wherein the electrically conductive layer (21) has a geometric thickness of 10 nm to 14 nm.

13. Projection assembly according to any of claims 1 to 12, wherein the external surfaces (I, IV) of the windscreen (10) are arranged substantially in parallel with one another.

14. Projection assembly according to any of claims 1 to 13, wherein the reflective coating (20) is arranged on the surface (II, III) of the outer pane (1) or the inner pane (2) facing the intermediate layer (3) or within the intermediate layer (3).

## Revendications

1. Agencement de projection pour un affichage tête haute (HUD), comprenant au moins
- un pare-brise (10), comprenant une vitre externe (1) en verre sodocalcique et une vitre interne (2) en verre sodocalcique qui sont reliées entre elles par l'intermédiaire d'une couche intermédiaire thermoplastique (3), le pare-brise comportant une zone HUD (B) ; et
- un projecteur (4) dirigé vers la zone HUD (B), dans lequel le rayonnement du projecteur (4) frappe le pare-brise (10) à un angle d'incidence allant de 45° à 70° ;
dans lequel
- le rayonnement du projecteur (4) est principalement polarisé p, et
- le pare-brise (10) est pourvu d'un revêtement réfléchissant (20) adapté pour réfléchir un rayonnement polarisé p ;
et dans lequel
- le revêtement réfléchissant (20) présente exactement une couche électroconductrice (21) à base d'argent,
- en dessous de la couche électroconductrice (21) est disposée une couche (22a) ou succession de couches diélectriques inférieures (22a, 22b, 22c) dont l'indice de réfraction est d'au moins 1,9,
- au-dessus de la couche électroconductrice (21) est disposée une couche (23a) ou succession de couches diélectriques supérieures (23a, 23b, 23c) dont l'indice de réfraction est d'au moins 1,9,
- toutes les couches diélectriques (22a, 22b, 22c ; 23a, 23b, 23c) du revêtement réfléchissant (20) présentent un indice de réfraction d'au moins 1,9,
**caractérisé en ce que :**
- le rapport entre l'épaisseur optique de la couche (23a) ou succession de couches diélectriques supérieures (23a, 23b, 23c) et l'épaisseur optique de la couche (22a) ou succession de couches diélectriques inférieures (22a, 22b, 22c) est d'au moins 1,7.

2. Agencement de projection selon la revendication 1, dans lequel le rapport entre l'épaisseur optique de la couche (23a) ou succession de couches diélectriques supérieures (23a, 23b, 23c) et l'épaisseur optique de la couche (22a) ou succession de couches diélectriques inférieures (22a, 22b, 22c) est d'au moins 1,8, de préférence d'au moins 1,9.

3. Agencement de projection selon l'une des revendications 1 ou 2, dans lequel l'épaisseur optique de la couche (23a) ou succession de couches diélectriques supérieures (23a, 23b, 23c) va de 100 nm à 200 nm, de préférence de 130 nm à 170 nm.

4. Agencement de projection selon l'une des revendications 1 à 3, dans lequel l'épaisseur optique de la couche (22a) ou succession de couches diélectriques inférieures (22a, 22b, 22c) va de 50 nm à 100 nm, de préférence de 60 nm à 90 nm.

5. Agencement de projection selon l'une des revendications 1 à 4, dans lequel
- en dessous de la couche électroconductrice (21) est disposée exactement une couche diélectrique inférieure (22a), de préférence à base de nitrure de silicium, et/ou
- au-dessus de la couche électroconductrice (21) est disposée exactement une couche diélectrique supérieure (23a), de préférence à base de nitrure de silicium.

6. Agencement de projection selon l'une des revendications 1 à 5, dans lequel
- en dessous de la couche électroconductrice (21) sont disposées une première couche diélectrique inférieure (22a), de préférence à base de nitrure de silicium, et une deuxième couche diélectrique inférieure (22b), de préférence à base d'oxyde de zinc, et/ou
- au-dessus de la couche électroconductrice (21) sont disposées une première couche diélectrique supérieure (23a), de préférence à base de nitrure de silicium, et une deuxième couche diélectrique supérieure (23b), de préférence à base d'oxyde de zinc.

7. Agencement de projection selon l'une des revendications 1 à 6, dans lequel
- en dessous de la couche électroconductrice (21) sont disposées une première couche diélectrique inférieure (22a), de préférence à base de nitrure de silicium, une deuxième couche diélectrique inférieure (22b), de préférence à base d'oxyde de zinc, et une troisième couche diélectrique inférieure (22c), de préférence à base d'un nitrure mixte silicium-métal, en particulier d'un nitrure mixte silicium-zirconium ou d'un nitrure mixte silicium-hafnium, et/ou
- au-dessus de la couche électroconductrice (21) sont disposées une première couche diélectrique supérieure (23a), de préférence à base de nitrure de silicium, une deuxième couche diélectrique supérieure (23b), de préférence à base d'oxyde de zinc, et une troisième couche diélectrique supérieure (23c), de préférence à base d'un nitrure mixte silicium-métal, en particulier d'un nitrure mixte silicium-zirconium ou d'un nitrure mixte silicium-hafnium.

8. Agencement de projection selon l'une des revendications 1 à 7, dans lequel le revêtement réfléchissant (20) comprend au moins une couche de blocage métallique (24) qui est disposée au-dessus et/ou en dessous de la couche électroconductrice (21) et qui présente une épaisseur géométrique inférieure à 1 nm.

9. Agencement de projection selon l'une des revendications 1 à 8, dans lequel la vitre externe (1) est teintée ou colorée et présente une transmission de lumière d'au moins 80 %.

10. Agencement de projection selon l'une des revendications 1 à 9, dans lequel le rayonnement du projecteur (4) est sensiblement purement polarisé p.

11. Agencement de projection selon l'une des revendications 1 à 10, dans lequel le rayonnement du projecteur (4) frappe le pare-brise (10) à un angle d'incidence allant de 60° à 70°.

12. Agencement de projection selon l'une des revendications 1 à 11, dans lequel les couches électroconductrices (21) présentent une épaisseur géométrique allant de 10 nm à 14 nm.

13. Agencement de projection selon l'une des revendications 1 à 12, dans lequel les surfaces (I, IV) externes du pare-brise (10) sont disposées sensiblement parallèlement l'une à l'autre.

14. Agencement de projection selon l'une des revendications 1 à 13, dans lequel le revêtement réfléchissant (20) est disposé sur la surface (II, III) de la vitre externe (1) ou de la vitre interne (2), laquelle surface est orientée vers la couche intermédiaire (3), ou à l'intérieur de la couche intermédiaire (3).
